Europäisches Patentamt

European Patent Office

Office européen des brevets

(11) Numéro de publication : **0 368 385 B1**

# (12) FASCICULE DE BREVET EUROPEEN

(45) Date de publication du fascicule du brevet :
02.12.92 Bulletin 92/49

(51) Int. Cl.⁵ : **B60C 25/00**

(21) Numéro de dépôt : **89202717.8**

(22) Date de dépôt : **27.10.89**

(54) **Dispositif pour ajuster l'outil d'un appareil de montage et de démontage de pneus d'automobiles.**

(30) Priorité : **08.11.88 BE 8801274**

(43) Date de publication de la demande :
**16.05.90 Bulletin 90/20**

(45) Mention de la délivrance du brevet :
**02.12.92 Bulletin 92/49**

(84) Etats contractants désignés :
**BE CH DE ES FR GB IT LI NL**

(56) Documents cités :
**FR-A- 2 132 015**
**US-A- 2 720 915**
**US-A- 4 230 170**
**US-A- 4 765 387**

(73) Titulaire : **du Quesne, Francis**
**Kleistraat 138**
**B-2630 Aartselaar (BE)**

(72) Inventeur : **du Quesne, Francis**
**Kleistraat 138**
**B-2630 Aartselaar (BE)**

(74) Mandataire : **Ottelohe, Jozef René**
**Bureau Ottelohe J.R. b.v.b.a. Fruithoflaan, 105**
**Bus 3**
**B-2600 Antwerpen (Berchem) (BE)**

EP 0 368 385 B1

## Description

L'invention concerne un dispositif pour ajuster la distance entre une roue fixée sur une table rotative et l'outil d'un appareil de montage et de démontage d'un pneu d'automobile respectivement sur et de ladite roue.

On connaît des appareils de montage et de démontage de pneus d'automobiles voir par exemple US-A-4 765 387 qui se composent principalement d'un socle, muni en sa partie avant d'une table horizontale rotative sur laquelle est fixée la roue, et muni en sa partie arrière d'une colonne verticale basculante vers l'arrière, laquelle colonne est pourvue en sa partie haute d'un bras horizontalement déplaçable, à l'extrémité duquel une tige verticale peut se déplacer et portant à son extrémité basse l'outil pour le montage et le démontage d'un pneu sur et de la roue précitée, le bras horizontal étant pourvu d'un moyen de serrage à manette pouvant fixer la tige verticale dans le bras horizontal et celui-ci dans la colonne verticale tout en procurant un écart vertical et horizontal de l'outil par rapport à ladite roue.

Bien qu'il soit possible d'ajuster l'outil par rapport à la roue, par une seule manette, avec ces appareils pour le montage ou le démontage d'un pneu sur et de ladite roue, de sorte que l'outil ne doit plus être réajusté pour les autres roues du même véhicule, ces appareils présentent cependant l'inconvénient que, pour enlever ou replacer la roue ou le pneu suivant, la colonne verticale, solidaire de l'outil, doit être basculée vers l'arrière autour d'un axe par lequel elle est fixée au socle de l'appareil. De ce fait, non seulement ces appareils sont d'une construction compliquée, ce qui en augmente le prix, mais en outre, chaque fois qu'on enlève ou qu'on replace une roue ou un pneu sur l'appareil, la colonne relativement lourde doit être basculée vers l'arrière à la main, dans le but d'écarter l'outil suffisamment et de permettre ainsi l'enlèvement ou la pose de la roue ou le pneu.

Pour remédier à ces inconvénients, selon la principale caractéristique de l'invention un appareil est réalisé conformément à la description donnée dans les revendications.

Dans l'appareil conforme à l'invention, il est fait usage d'une colonne verticale montée d'une manière fixe sur l'arrière du socle, tandis que sur la partie avant du socle est montée une table rotative qui maintient la roue, et afin d'ajuster la distance entre ladite roue et l'outil pour le montage et le démontage du pneu et de limiter le déplacement du bras et de la tige portant l'outil, dans la direction de la roue, il est monté à l'extrémité arrière du bras une butée réglable et un moyen de blocage pour la fixation de cette butée réglable qui agit librement avec une butée fixe de la colonne, et où entre ledit moyen de blocage et le moyen de serrage à manette pour fixer dans le bras la tige portant l'outil, il est prévu un moyen d'accouplement.

A titre d'exemple, sans aucun caractère limitatif, suit ci-dessous une description plus détaillée, d'une forme choisie de réalisation du dispositif conforme à l'invention. Cette description renvoie aux dessins annexés, dans lesquels :

la fig. 1 représente une vue de côté de l'appareil, l'outil étant représenté en position retirée;

la fig. 2 représente une vue de l'autre côté et agrandie de la partie arrière de l'appareil en position retirée de l'outil;

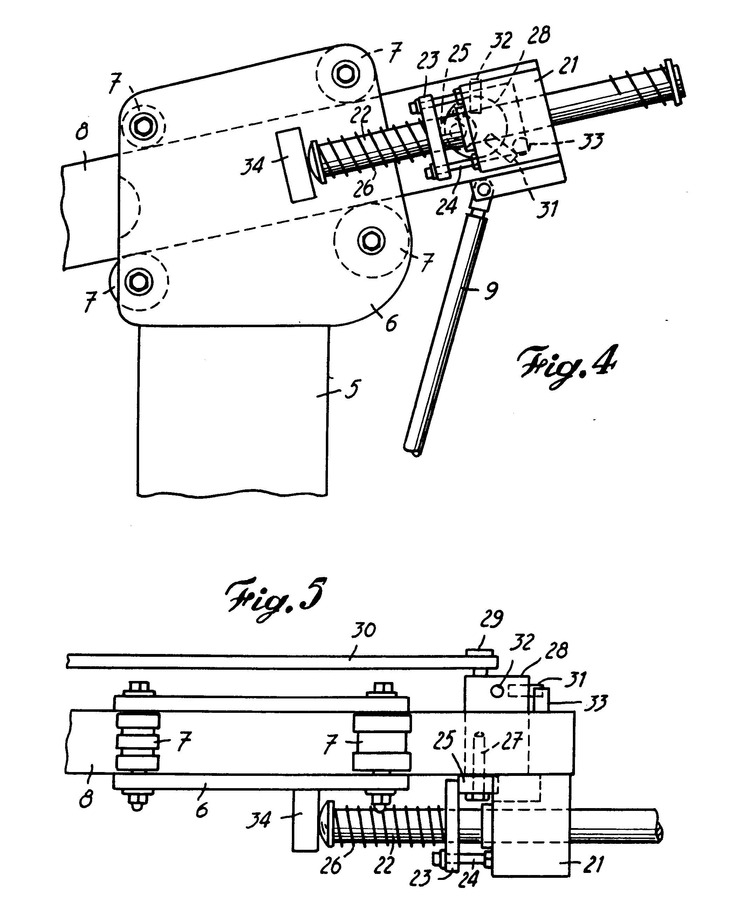

la fig. 3 représente une même vue de côté que la fig.1, mais l'outil ajusté à une distance fixe de la roue;

la fig. 4 représente une même vue agrandie que la fig. 2 mais le moyen de blocage étant bloqué;

la fig. 5 représente une vue d'en haut.

Dans ces figures on remarque qu'à l'avant du socle 1 de l'appareil est montée une table 2 rotative, horizontale, actionnée par un moteur, laquelle table est pourvue de griffes 3 radialement déplaçables, entre lesquelles une roue 4 est serrée. A l'arrière du socle 1 est fixée une colonne verticale 5, qui est pourvue en haut d'une boîte conductrice 6. Dans cette boîte conductrice est disposé entre quatre rouleaux-guides 7 un bras 8 déplaçable librement et descendant obliquement vers la roue. Pour équilibrer le déplacement du bras, un ressort à gaz 9 est monté entre l'extrémité arrière du bras 8 et la colonne 5. La partie avant du bras 8 est pourvue d'un manchon 10, dans lequel coulisse librement une tige verticale 11, dont la partie inférieure porte l'outil 12 de montage et de démontage d'un pneu. Le haut de la tige 11 est pourvue d'une poignée 13. Pour le blocage de la tige 11 dans le manchon 10 il est fait usage d'une plaque de serrage 14 disposée autour de la tige 11, laquelle plaque de serrage 14 est pouvue d'un boulon-guide 15, qui est librement déplaçable dans un oeillet 16, qui fait partie du manchon 10. La plaque de serrage 14 est obliquement poussée dans la position de blocage sur la tige verticale 11 par un tenon de pression 17 prévu dans le bras 8 et poussé vers le haut par un excentrique 18 monté dans le bras 8, excentrique sur lequel une manette de commande 19 est fixée. Un ressort de pression 20 placé entre la plaque de serrage 14 et la poignée 13, équilibre le poids de la tige 11 et de l'outil 12. Sur l'extrémité arrière du bras 8 est monté un bloc guide 21, dans lequel une tige d'arrêt 22 peut librement coulisser parallèlement au bras 8. Autour de la tige d'arrêt 22 est prévu une plaque de serrage 23, dont un côté peut coulisser librement sur deux boulons de guidage 24 et prendre une position oblique par rapport à la tige 22, lesquels boulons 24 sont fixés dans le bloc guide 21. Le côté opposé de la plaque de serrage 23 est maintenu contre une roulette de pression 25 par un ressort de pression 26 placé entre un collet de la tête de la tige d'arrêt 22 et la plaque de serrage 23. La roulette de pression 25 est montée sur un axe 27, qui est fixé excentriquement sur une des surfaces terminales d'un cylindre rotatif 28 traversant l'extrémité arrière du bras 8. Sur l'autre surface terminale du cylindre 28 est fixé excentriquement un axe 29, qui porte l'une des extrémités d'une tringle d'accouplement 30, tandis que l'autre extrémité de cette tringle 30 est fixée de la même façon à l'excentrique 18 du moyen de serrage pour la fixation de la tige 11. Pour limiter la rotation du cylindre 28 dans les deux directions, le cylindre 28 est pourvu de deux tenons 31-32, qui agissent de concert avec la butée 33 fixée sur le bras 8. La tige d'arrêt 22 opère de concert avec une butée 34 fixée sur la boîte conductrice 6 de la colonne 5, grâce à quoi il est possible de limiter le déplacement du bras 8 vers la roue 4.

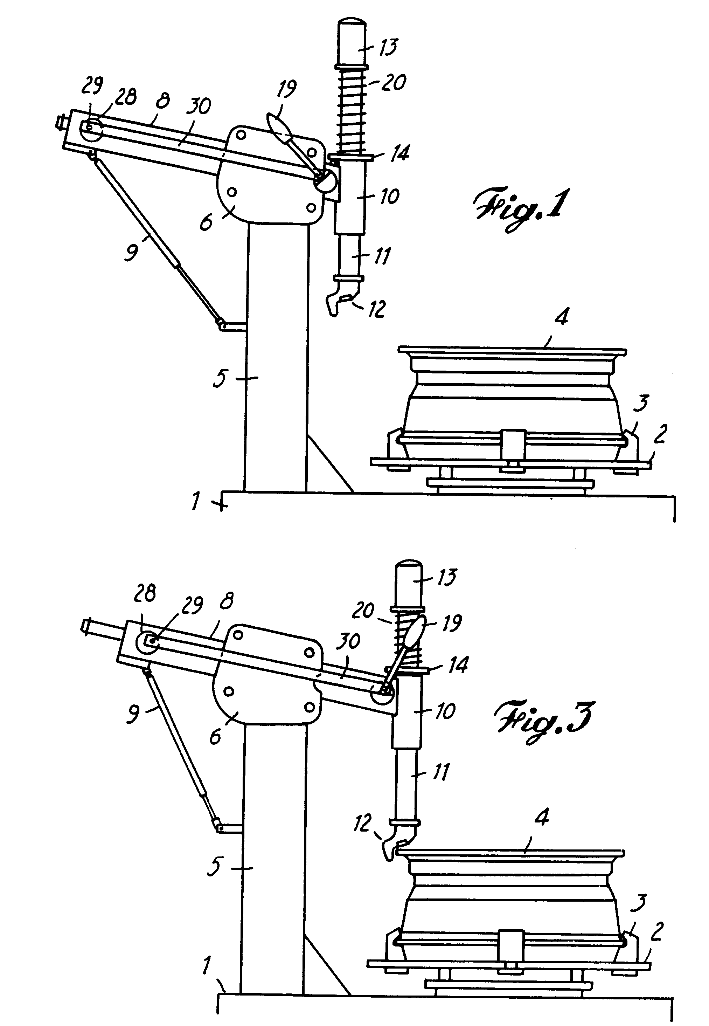

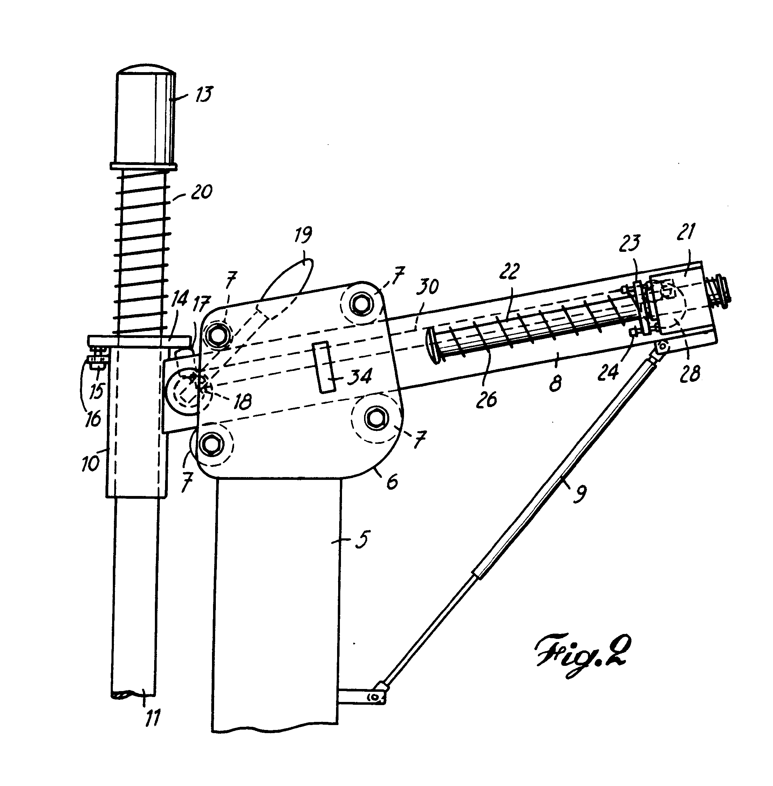

Dans les figures 1 et 2, on remarque que la manette 19 est inclinée vers l'arrière et que dans cette position la tringle d'accouplement 30 maintient l'excentrique 18 et le cylindre 28 dans une position telle que le tenon de pression 17 se trouve dans sa position la plus basse et n'exerce aucune pression sur la plaque de serrage 14 et que la roulette de pression 25 du cylindre 28 n'exerce aucune pression sur la plaque de serrage 23, de sorte que tant la tige verticale 11, portant l'outil 12, que la tige d'arrêt 22, soient librement déplaçables. Quand une roue d'un diamètre déterminé est fixée entre les griffes 3 de la table 2, le bras 8 est tiré vers la roue 4 à l'aide de la poignée 13 et la tige 11 est déplacée verticalement jusqu'à ce que l'outil 12 soit dans la position voulue, en concert avec la roue. Pendant le déplacement du bras 8 vers la roue, la tête de la tige d'arrêt 22 heurte la butée 34 et la tige d'arrêt 22 est déplacée vers l'arrière dans le bloc guide 21. Le ressort à gaz 9 est comprimé et rend aisé le déplacement du bras 8. Ensuite dans la position voulue de l'outil 12, la manette 19 est basculée vers l'avant, de sorte que l'excentrique 18 pousse le tenon de pression 17 vers le haut et que celui-ci presse la plaque de pression 14 obliquement sur la tige 11, ce qui soulève légèrement celle-ci tout en la bloquant par rapport au manchon 10. En même temps, grâce à la tringle d'accouplement 30, le cylindre 28 est tourné et la roulette de pression 25, montée excentriquement, pousse obliquement la plaque de serrage 23 sur la tige d'arrêt 22 et contre la tête des boulons de guidage 24, ce qui provoque un léger déplacement de la tige d'arrêt 22 et le blocage de celle-ci par rapport au bloc guide 21 (figures 4 et 5). Ainsi, les deux mouvements excentriques simultanés du dispositif ont bloqué et déplacé légèrement la tige 11 et la tige 22, de telle manière qu'un écart vertical et horizontal de l'outil 12 s'est produit par rapport à la roue 4.

Pour l'enlèvement de la roue et le replacement d'une roue de la même dimension que la première sur la table rotative 2, il suffit de déplacer, au moyen de la poignée 13, le bras 8 et donc l'outil 12 vers l'arrière. Lorsqu'ensuite le bras 8 avec l'outil 12 est de nouveau déplacé vers la roue 4, l'outil 12 sera automatiquement ramené à la distance présélectionnée de la roue.

Il va de soi que les pièces décrites ci-dessus peuvent avoir n'importe quelles formes et dimensions et que certaines de ces pièces peuvent être remplacées par d'autres qui poursuivent le même but. La disposition relative de ces pièces peut également différer.

## Revendications

1. Dispositif pour ajuster la distance entre une roue fixée sur une table rotative et l'outil d'un appareil de montage et de démontage d'un pneu d'automobile respectivement sur et de ladite roue, lequel appareil se compose principalement d'une colonne verticale (5), d'un bras (8) transversalement déplaçable dans ladite colonne, d'une tige (11) verticalement déplaçable à une extrémité dudit bras, d'un outil (12) pour le montage et le démontage d'un pneu prévu en bas de ladite tige (11), d'un moyen de serrage (14 à 18) à manette (19) prévu entre lesdits bras (8) et tige (11), pour la fixation de la tige (11) par rapport au bras (8), et sous ledit outil d'une table (2) rotative à griffes (3) pour fixer la roue (4) sur la table, caractérisé par le fait qu'à l'autre extrémité du bras (8) déplaçable sont prévus une butée réglable (21-22) et un moyen de blocage (23 à 33) pour cette butée réglable, laquelle butée réglable agit librement avec une butée fixe (34) de la colonne (5) pour limiter dans la direction de la roue (4) le déplacement du bras (8) et de la tige portant l'outil (12), et où entre ledit moyen de blocage (23 à 33) et le moyen de serrage (14 à 18) à manette (19), pour la fixation de la tige (11) verticale avec outil (12) dans ledit bras, est prévu un moyen d'accouplement (30).

2. Dispositif conforme à la revendication 1, caractérisé par le fait que la butée réglable fait partie d'un bloc guide (21) fixé sur le bras (8) et est constituée d'une tige d'arrêt (22) disposée parallèlement au bras (8) et qui peut coulisser dans le bloc guide (21) et y peut être fixée par le moyen de blocage (23 à 33).

3. Dispositif conforme à la revendication 2, caractérisé par le fait qu'une plaque de serrage (23) est librement disposée autour de la tige d'arrêt (22), laquelle plaque de serrage pivote d'une part autour de deux boulons de guidage (24) fixés au bloc guide (21) et d'autre part agit de concert avec un excentrique (25) qui fait partie du moyen de blocage (23 à 33) pour le blocage de la plaque de serrage (23) sur la tige d'arrêt (22) et la fixation de celle-ci par rapport au bloc guide (21), où un ressort de pression (26) est placé entre la plaque de serrage et un collet prévu sur la tête de la tige d'arrêt (22).

4. Dispositif conforme à la revendication 3, caractérisé par le fait que l'excentrique se compose d'un cylindre rotatif (28) traversant le bras (8), cylindre dont un côté est accouplé à une extrémité d'une tringle d'accouplement (30) dont l'autre extrémité est accouplée au moyen de serrage (14 à 18) pour la fixation de la tige (11) verticale portant l'outil (12) pour le montage et le démontage d'un pneu, l'autre côté du cylindre (28) étant pourvu d'une roulette de pression (25) qui agit de concert avec la plaque de serrage (23) du moyen de blocage et où l'axe (27) de la roulette de pression (25) est disposé excentriquement par rapport à l'axe du cylindre (28).

5. Dispositif conforme à la revendication 4, catactérisé par le fait que le cylindre (28) est pourvu de deux tenons (31-32), et le bras (8) d'une butée (33) fixe, pour limiter dans deux directions le mouvement rotatif du cylindre (28) portant la roulette de pression (25).

**Patentansprüche**

1. Vorrichtung zur Einstellung des Abstandes zwischen einem auf einem Drehtisch befestigten Rad und dem Werkzeug eines Gerätes für die Anordnung und die Entfernung eines Kraftwagenreifens auf bzw. ab diesem Rad, wobei dieses Gerät im wesentlichen aus den folgenden Teilen besteht : eine senkrechte Säule (5), ein in dieser säule querverschiebarer Arm (8), eine an einem Ende des vorgenannten Armes senkrecht verschiebbar angeordnete Stange (11), ein am unteren Ende der vorgenannten stange (11) vorgesehenes Werkzeug (12) für die Anordnung bzw. Entfernung eines Reifens, ein zwischen dem vorgenannten Arm (8) und der vorgenannten stange (11) angeordnete Klemmvorrichtung (14-18) mit Handgriff (19) für die Blockierung der stange (11) in bezug auf den arm (8), und ein unter diesem Werkzeug angeordneter Drehtisch (2) mit Klauen (3) für die Befestigung des Rades (4) auf dem Tisch, dadurch gekennzeichnet, dass am anderen Ende des bewegbaren Armes (8) ein regelbarer Anschlag (21-22) und ein Blockiermittel (23-33) für diesen regelbaren Anschlag vorgesehen ist, wobei dieser regelbare Anschlag frei mit einem Festanschlag (34) der Säule (5) zusammenwirkt zwecks Begrenzung in der Richtung des Rades (4) der Verstellung des armes (8) und der das Werkzeug (12) tragenden stange, und dass zwischen dem vorgenannten Blockiermittel (23-33) und der mit einem Handgriff (19) ausgestatteten Klemmvorrichtung (14-18) eine Kupplungsvorrichtung (30) angeordnet ist für die Befestigung der senkrechten stange (11) mit dem Werkzeug (12) im vorgenannten Arm.

2. Vorrichtung gemäss dem Anspruch 1, dadurch gekennzeichnet, dass der vorgenannte regelbare Anschlag ein Teil eines auf dem arm (8) befestigten Leitblockes (21) ist und besteht aus einer mit dem arm (8) gleichlaufenden und im Leitblock (21) gleitender Abstellstange (22) welche mit dem Blockiermittel (23-33) im Leitblock (21) befestigt werden kann.

3. Vorrichtung gemäss dem Anspruch 2, dadurch gekennzeichnet, dass eine frei um die Abstellstange (22) angeordnete Klemmplatte (23) einerseits um zwei am Leitblock (21) befestigte Leitblolzen (24) dreht und anderseits zusammenwirkt mit einem Exzenter (25) des Blockiermittels (23-33) zwecks Blockierung der vorgenannten Klemmplatte (23) auf der Abstellstange (22) und der Befestigung derselben in bezug auf den Leitblock (21), wo eine Druckfeder (26) zwischen der Klemmplatte und einem Kragen der Abstellstange (22) angeordnet ist.

4. Vorrichtung gemäss dem Anspruch 3, dadurch gekennzeichnet, dass der vorgenannte Exzenter besteht aus einem achsial durch den Arm (8) laufenden Drehzylinder (28), der einerseits am Ende einer Kuppelstange (30) angekoppelt ist, deren zweites Ende an der Klemmvorrichtung (14-18) für die Befestigung der das Werkzeug (12) für die Arnordnung bzw. Entfernung eines Reifens tragenden senkrechten stange (11) angekoppelt ist, und anderseits versehen ist mit einem mit der Klemmplatte (23) des Blockiermittels zusammenwirkenden Druckröllchen (25), wo die Achse (27) desselben exzentrisch in bezug auf die Achse des Zylinders (28) angeordnet ist.

5. Vorrichtung gemäss dem anspruch 4, dadurch gekennzeichnet, dass der Zylinder (28) mit zwei Zapfen (31, 32) und der Arm (8) mit einem Festanschlag (33), zwecks Begrenzung in zwei Richtungen der Drehbewegung des das Druckröllchen (25) tragenden Zylinders (28), versehen ist.

**Claims**

1. Device for adjusting the distance between a wheel fixed on a rotating table and the tool of an apparatus for fitting and removing a car tyre respectively to or from said wheel, which apparatus consists mainly of a vertical column (5), an arm (8) which can be moved transversely in said column, a vertically moving rod (11) at one end of said arm, a tool (12) for the fitting and removal of a tyre at the bottom of said rod (11), a clamping device (14 to 18) with a lever (19) provided between said arm (8) and rod (11) for fastening the rod (11) in position with respect to the arm (8), and under said tool a rotating table (2) with claws (3) for holding the wheel (4) to the table, characterized by the fact that at the other end of the movable arm (8) an adjustable stop (21-22) and a means of locking (23 to 33) this adjustable stop, which adjustable stop acts freely in conjunction with a fixed stop (34) on the column (5) to limit the movement of the arm (8) and the rod bearing the tool (12) in the direction of the wheel (4), and where a means of linkage (30) is provided between said locking means (23 to 33) and the clamping means (14 to 18) with lever (19) for fastening the vertical rod (11) with the tool (12) in said arm.

2. Device according to claim 1, characterized by the fact that the adjustable stop forms part of a guide block (21) mounted on the arm (8) and which consists of a stop rod (22) arranged parallel to the arm (8) and which can slide in the guide block (21) and which can be fixed by means of the locking means (23 to 33).

3. Device according to claim 2, characterized by the fact that a clamping plate (23) is freely disposed around the stop rod (22), which clamping plate pivots on the one hand around two guide bolts (24) fastened to the guide block (21) and on the other hand acts in conjunction with an eccentric (25) which forms part of the locking means (23-33) in order to lock the clamping plate (23) on the stop rod (22) and fix same with respect to the guide block (21), where a pressure spring (26) is placed between the clamping plate and a collar provided on the head of the stop rod (22).

4. Device according to claim 3, characterized by the fact that the eccentric consists of a rotating cylinder (28) traversing the arm (8), one side of which cylinder is connected at one end of a link bar (30) of which the other end is connected to the clamping means (14 to 18) for fastening the vertical rod (11) bearing the tool (12) for fitting and removing a tyre, the other side of the cylinder (28) being provided with a pressure roller (25) which acts in conjunction with the clamping plate (23) of the locking means and where the spindle (27) of the pressure rod (25) is excentric to the axis of the cylinder (28).

5. Device in accordance with claim 4, characterized by the fact that the cylinder (28) is provided with two studs (31-32), and the arm (8) with a fixed stop (33), so that the rotational movement of the cylinder (28) bearing the pressure roller (25) can be limited in two directions.

Fig.1

Fig.3

Fig.2

Fig.4

Fig.5